# EUROPEAN PATENT SPECIFICATION

(11) **EP 1 859 453 B1**
(45) Date of publication and mention of the grant of the patent: **29.07.2015**
(21) Application number: 05718143.0
(22) Date of filing: 07.03.2005
(51) Int. Cl.: G21C 17/017, F22B 37/00

(54) **ROTATING PROBE FLEXIBLE SHAFT ASSEMBLY**
FLEXIBLE WELLENBAUGRUPPE EINER ROTIERENDEN SONDE
ENSEMBLE MANDRIN SOUPLE POUR SONDE ROTATIVE

(30) Priority: 07.03.2005 HR 20050220
(43) Date of publication of application: 28.11.2007
(73) Proprietor: Inetec-Institute for Nuclear Technology D.O.O., 10000 Zagreb (HR)
(72) Inventor: GRACIN, Renato, 10000 Zagreb (HR)
(74) Representative: Köteles, Zoltan
(86) International application number: PCT/HR2005/000019
(87) International publication number: WO 2006/095208

(56) References cited:
- EP-A- 0 471 556
- US-A- 5 279 168
- US-A1- 2004 075 432
- US-A1- 2004 112 154

## Description

This invention relates to rotating probe flexible shaft assembly used as carrier of eddy current rotating probe made for examination of curved tubing. More definitely the invention is a rotating probe flexible shaft assembly for providing good flexibility, while maintaining feature to be pushed-pulled and rotated in the same. The assembly comprising an flexible shaft with diameter of Ø3.2 mm, made of tensile wires with 4 or 5 layers.

Basically this invention was developed to be used in the assembly of rotating probe for examination of steam generator tubing in WWER type of nuclear power plants (inside diameter of tubing is 13 mm).

The technical problem was the following. Since eddy current probe (sensor and shaft) needs to be pushed and then pulled through curved and wet tubing by friction system with 2 pairs of driving wheels, it often becomes difficult problem.

Usually, shaft used on rotating eddy current probes for 013 mm inside diameter of tubing is flexible shaft with diameter of 03.2 mm (flexible shaft with four layers). Regardless if rotating probe has cross wound or pancake coil mounted, two coaxial cables are wound around the shaft, connecting sensor of the probe with probe's connector. By connector, probe is attached to motor unit having duty to rotate flexible shaft and probe's sensor around its axis. Thin coaxial cables are wound around flexible shaft and protected by nylon pearls fixed to the shaft at spacing of approximately 6 mm. The rotating probe is rotated by speed of 300 rpm, while pulled with 5 mm/s. This system is successfully applied on straight tubing or less curved tubing than it is case on tubing in steam generators of WWER type of nuclear power plants. In that particular case, the most of tubes start with bend right after the tube entrance. This bend does not allow motor unit to enter inside the tube. Due to fact that requirement for inspection is up to 9 m inside tube, it follows that length of flexible shat assembly shall be at least 9 m. Today, fixtures designed for eddy current inspection of tubing in steam generators of WWER type of plant, mostly have probe pusher-puller installed inside generator's collector in order to be close to the tube entrance (for "bobbin" type of eddy current probes). Therefore, mentioned type of the rotating probe can not be used, because request is that shaft shall be rotated and in the same time axially moved by friction system of probe pusher-puller acting on the same shaft.

Based on mentioned limitations, the new flexible shaft assembly was developed with intention to pass easily through the tube's bends, while being rotated and axially moved in the same time.

Basic element of assembly is flexible shaft with diameter 03.2 mm, length up to 10 m.

Around the shaft are wound two coaxial cables with diameter 00.5 mm. Every 50 mm is mounted heat shrink tube with inserted glue on inner radius (length of shrink is 4 mm). Every heat shrink tube is heated by fan, and by this way fixing cables to shaft every 50 mm distance. Flexible nylon hose is mounted over such prepared shaft. On the both ends of the shaft bearing assembly is mounted. This way allows probe pusher's driving wheels to push-pull nylon hose, while flexible shaft is rotating inside the hose.

The invention of the opening paragraph in general is characterized in that the flexible shaft is designed to have low torsional deflection, with two coaxial cables wound around the flexible shaft and fixed thereto in every 50 mm and with flexible nylon hose mounted over the flexible shaft and cables with bearing assemblies as recited in claim 1. The invention will be further described with reference to some drawings listed below.

A flexible shaft assembly for use with an eddy current probe in the inspection of steam generator tubes in nuclear power plants is described in US 2004/0075432 A1. The assembly comprises a flexible shaft made of braided cable, a coaxial cable helically wound around the shaft, and an outer flexible hose.
Fig.1 shows a rotating probe assembly according to invention.
Fig.2 shows cross section detail of a rotating probe flexible shaft assembly according to invention.
Fig.3 shows appearance of a stud in top and cross-sectional views.
Fig.4 shows appearance of a bearing in front and side view.
Fig. 5 shows a nut in front and side view.

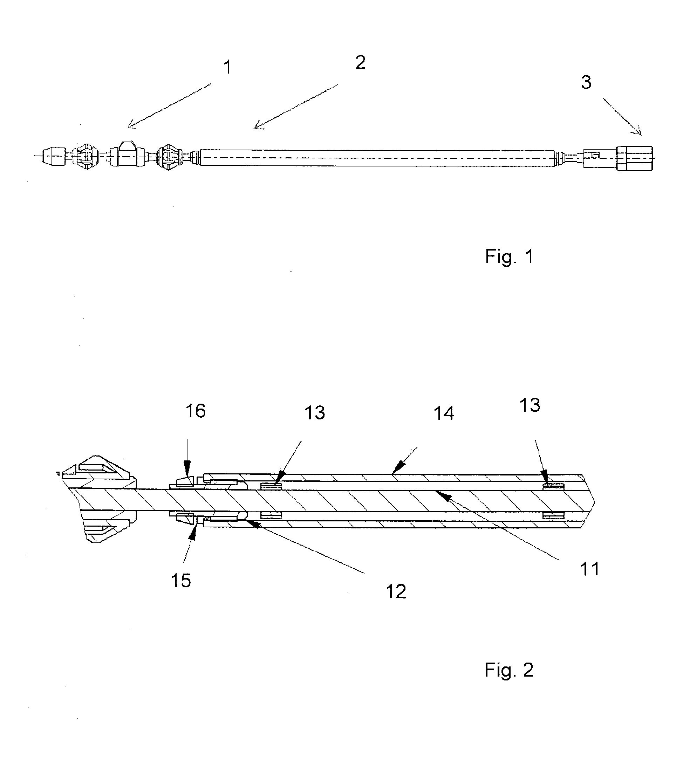

Fig.1 shows a rotating probe assembly according to the invention including assembly of a sensor 1 attached to the flexible shaft assembly 2. The flexible shaft assembly 2 is ended with a connector 3 used to attach the rotating probe to a motor unit assembly.

Fig.2 shows cross section detail of the rotating probe flexible shaft assembly according to the invention and it is suitable to be represent the principle of the invention Shaft assembly comprises of: flexible shaft 11, stud 12, heat shrink tubes 13, nylon hose 14, bearing 15, and a nut 16.

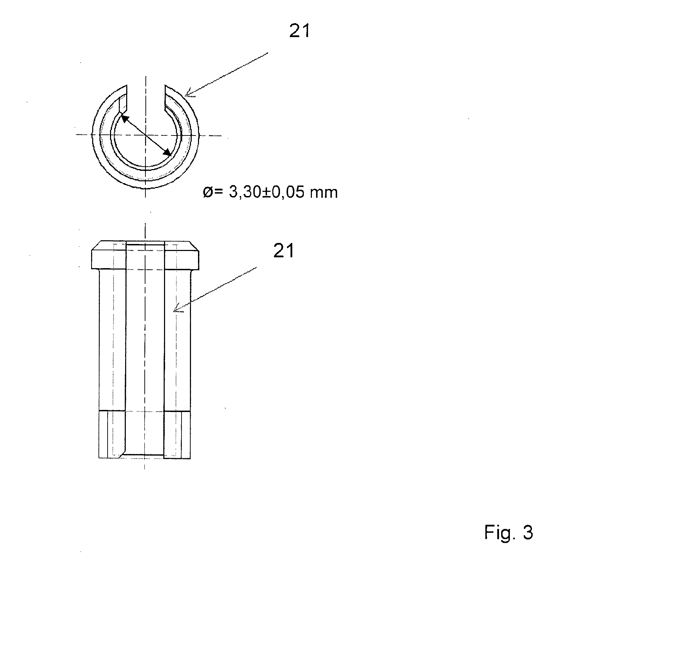

Basis element of the assembly according to the invention is a flexible shaft 11 of a diameter 03.2 mm ± 0.05 mm. This is designed for low torsional deflection. On both ends of the shaft there are mounted studs 21, showed in Figure 3 in top and cross-sectional views. The studs 21 are preferably made of stainless steel. Studs 21 are soldered to the flexible shaft 11. After that, cables which are already attached to the sensor 1 of the probe are mounted on the flexible shaft 11 by wounding around that. Furthermore, a heat shrink tubes (06x4 mm, glue on inner radius, shrink ratio 3:1) are placed over shaft and cables, spaced 50 mm from each other. By using heating gun, shrinks are heated and fixed together with cables to the shaft. Next step is preparation of nylon hose (material nylon 66-nylaflow, dimension 5/16 T-Ø7.93/Ø5.9 mm). Nylon hose is cut on desired length and on each end is made thread 1/4-28, length 6 mm. Prepared hose is placed over shaft to the front stud. During this process, every heated shrink tube is greased (lithium grease).

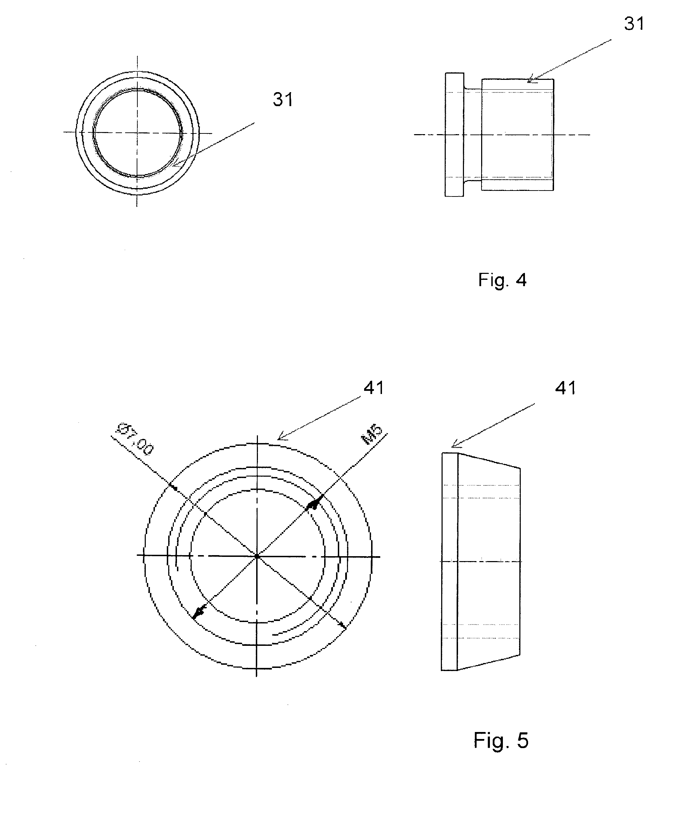

Fig. 4 shows a bearing 31 in front and side view, which bearing is preferably made of bronze and wounded inside hose with added glue, for example Loctite 262 as thread locker. Also, grease can be placed over stud 21 in contact with the bearing 31.

Finally, Fig. 5 shows a nut 41, in front and side view, which nut 41 is mounted on stud 21, holding the whole bearing assembly. Nut 41 preferable made of stainless steel and soldered to nut 16 in order to prevent that to be moved opposite from wire track. The same procedure can be repeated on the end to the connector 3 end of the flexible shaft assembly 2.

In the embodiment of the invention the two coaxial cables has the diameter of 00.5 mm with 40 or 50 ohm resistance characteristics and are wounded around the flexible shaft 11.

In an embodiment of the invention the two coaxial cables are fixed to the flexible shaft 11 every 50 mm by heat shrink tubes 13 with dimensions of Ø6x4 mm, with shrink ratio 3:1, and glued on inner radius.

In an embodiment of the invention the flexible nylon hose 14 is mounted over the flexible shaft 11 and cables. Preferably the flexible nylon hose is of material nylon 66-nylaflow with diameter of Ø7.93 to 05 9 mm.

In an embodiment of the invention the bearing 31 assemblies has diameter of 07.00 to 04.8 mm.

As mentioned before, this rotating probe flexible shaft assembly 2 is developed to be used in eddy current rotating probe for examination of tubing in steam generators installed in WWER nuclear power plants. However, such assembly can be used for the other similar applications.

## Claims

1. Rotating probe flexible shaft assembly for providing good flexibility, while maintaining feature to be pushed-puled and rotated in the same time, the assembly comprising an flexible shaft with diameter of 03.2 mm, made of tensile wires with 4 or 5 layers, wherein the flexible shaft (11) is designed to have low torsional deflection, with two coaxial cables wound around the flexible shaft (11) and fixed thereto every 50 mm and with flexible nylon hose (14) mounted over the flexible shaft (11) and cables with bearing (31) assemblies.

2. The rotating probe flexible shaft assembly of claim 1, **characterized in that** the two coaxial cables has the diameter of 00.5 mm with 40 or 50 ohm resistance characteristics around the flexible shaft (11).

3. The rotating probe flexible shaft assembly of claim 1, **characterized in that** two coaxial cables are fixed to the flexible shaft (11) in every 50 mm by heat shrink tubes (13) with dimensions of Ø6x4, with heat shrink ratio 3:1, and glued on inner radius.

4. The rotating probe flexible shaft assembly of claim 1, **characterized in that** the flexible nylon hose (14) is mounted over the flexible shaft (11) and cables.

5. The rotating probe flexible shaft assembly of claim 4, **characterized in that** the flexible nylon hose (14) is of material nylon 66-nylaflow with diameter of 07.93 to 05.9 mm.

6. The rotating probe flexible shaft assembly of claim 1, **characterized in that** bearing (31) assemblies has diameter of Ø7.00 to 04.8 mm.

## Patentansprüche

1. Flexible Wellenbaugruppe einer rotierenden Sonde, die eine gute Flexibilität unter Beibehaltung der Eigenschaft gleichzeitig gezogen, gedrückt und gedreht werden zu können aufweist, die Baugruppe umfassend eine flexible Welle mit einem Durchmesser von 03,2 mm gefertigt aus dehnbaren Drähten mit 4 oder 5 Schichten, wobei die flexible Welle (11) mit einer geringen Drehauslenkung ausgebildet ist, mit zwei Koaxialkabeln, die um die flexible Welle (11) gewickelt sind und an dieser jede 50 mm befestigt sind und mit einem flexiblen Nylonschlauch (14), der über der flexiblen Welle (11) befestigt ist und Kabel mit Lagereinheiten (31).

2. Die flexible Wellenbaugruppe einer rotierenden Sonde nach Anspruch 1, **dadurch gekennzeichnet, dass** die zwei Koaxiakabel einen Durchmesser von Ø0,5 mm mit einer 40 oder 50 Ohm Widerstandscharakteristik um die flexible Welle (11) aufweisen.

3. Die flexible Wellenbaugruppe einer rotierenden Sonde nach Anspruch 1, **dadurch gekennzeichnet, dass** zwei Koaxialkabel mittels Wärmeschrumpfschläuchen (13), die Abmessungen von 06x4 und ein Wärmeschrumpfverhaltnis von 3:1 aufweisen und an den inneren Radius gekiebt sind, jede 50 mm an der flexiblen Welle (11) befestigt sind.

4. Die flexible Wellenbaugruppe einer rotierenden Sonde nach Anspruch 1, **dadurch gekennzeichnet, dass** der flexible Nylonschlauch (14) über der flexiblen Welle (11) und den Kabeln befestigt ist.

5. Die flexible Wellenbaugruppe einer rotierenden Sonde nach Anspruch 4, **dadurch gekennzeichnet, dass** der flexible Nylonschlauch (14) aus dem Material Nylon 66-Nylaflow mit einem Durchmesser von 07,93 bis 05,9 mm gefertigt ist.

6. Die flexible Wellenbaugruppe einer rotierenden Sonde nach Anspruch 1, **dadurch gekennzeichnet, dass** die Lagereinheiten (31) einen Durchmesser von 07,00 bis 04,8 mm aufweisen.

## Revendications

1. Ensemble d'arbre flexible pour sonde rotative permettant de fournir une bonne flexibilité tout en maintenant la caractéristique de pouvoir assurer un mouvement push-pull et une rotation en même temps, l'ensemble comprenant un arbre flexible d'un diamètre de 3,2 mm constitué de fils métalliques de traction en 4 ou 5 couches, dans lequel l'arbre flexible (11) est conçu pour avoir une faible déformation à la torsion avec deux câbles coaxiaux qui sont enroulés autour de l'arbre flexible (11) et y sont fixés tous les 50 mm et avec un tuyau de Nylon flexible (4) monté par-dessus l'arbre flexible (11) et les câbles avec des ensembles de paliers (31).

2. Ensemble d'arbre flexible pour sonde rotative selon la revendication 1, **caractérisé en ce que** les deux câbles coaxiaux ont un diamètre de 0,5 mm avec des caractéristiques de résistance de 40 ou 50 ohms autour de l'arbre flexible (11).

3. Ensemble d'arbre flexible pour sonde rotative selon la revendication 1, **caractérisé en ce que** deux câbles coaxiaux sont fixés à l'arbre flexible (11) tous les 50 mm par des tubes frettés à chaud (13) avec des dimensions de 6 x 4, selon un rapport de frettage de 3:1, et collés sur un rayon interne.

4. Ensemble d'arbre flexible pour sonde rotative selon la revendication 1, **caractérisé en ce que** le tuyau de Nylon flexible (14) est monté par-dessus l'arbre flexible (11) et les câbles.

5. Ensemble d'arbre flexible pour sonde rotative selon la revendication 4, **caractérisé en ce que** le tuyau de Nylon flexible (14) est formé d'un matériau de type Nylon (66-nylaflow) d'un diamètre de 7,93 à 5,9 mm.

6. Ensemble d'arbre flexible pour sonde rotative selon la revendication 1, **caractérisé en ce que** les ensembles de paliers (31) ont un diamètre de 7,0 à 4,8 mm.
